Europäisches Patentamt

European Patent Office

Office européen des brevets

(11) Veröffentlichungsnummer: **0 421 978 A1**

## (12) EUROPÄISCHE PATENTANMELDUNG

(21) Anmeldenummer: 90890257.0

(22) Anmeldetag: 06.09.90

(51) Int. Cl.5: **C22B 1/00, C21C 5/56**

(30) Priorität: 11.09.89 AT 2122/89

(43) Veröffentlichungstag der Anmeldung:
10.04.91 Patentblatt 91/15

(84) Benannte Vertragsstaaten:
BE CH DE DK ES FR GB GR IT LI LU NL SE

(71) Anmelder: **VOEST-ALPINE STAHL Aktiengesellschaft**
**Turmstrasse 41**
**A-4020 Linz(AT)**

(72) Erfinder: **Die Erfinder haben auf ihre Nennung verzichtet**

(74) Vertreter: **Haffner, Thomas M., Dr. et al**
**Patentanwaltskanzlei Dipl.-Ing. Adolf Kretschmer Dr. Thomas M. Haffner**
**Schottengasse 3a**
**A-1014 Wien(AT)**

(54) Verfahren zur thermischen Vorbehandlung von Schrott.

(57) Bei einem Verfahren zur thermischen Vorbehandlung von Schrott zur Verringerung der Schadstoffbildung bei einem nachfolgenden Einschmelzprozeß wird der Schrott (2) auf Temperaturen unter 450°C unter $O_2$ Mangelbedingungen erhitzt, und die hiebei gebildeten Gase werden einer Waschung unterworfen.

EP 0 421 978 A1

## VERFAHREN ZUR THERMISCHEN VORBEHANDLUNG VON SCHROTT

Die Erfindung bezieht sich auf ein Verfahren zur thermischen Vorbehandlung von Schrott zur Verringerung der Schadstoffbildung bei einem nachfolgenden Einschmelzprozeß.

Der für das Schrotteinschmelzen beispielsweise nach dem KVA-Verfahren eingesetzte Schrott enthält je nach seiner Herkunft mehr oder minder große Anteile an organischen Bestandteilen, welche beispielsweise von Beschichtungen, Lacken od.dgl. herrühren. Insbesondere im Fall von Beschichtungen aus Polyvinylchloriden können in der Folge beim Einschmelzprozeß eine Reihe von hochtoxischen Substanzen gebildet werden, welche zwar bei den Temperaturen des Einschmelzprozesses thermisch zersetzt werden, jedoch zumindest teilweise nach der Zersetzung wiederum zu stabilen toxischen Substanzen rekombinieren können. Insbesondere halogensubstituierte organische Verbindungen können im Zusammenhang mit den Zersetzungsprodukten von Kohlenwasserstoffen oder auch von halogenierten KohlenwasserstoEfen zur Rekombination von Dioxinen führen, wobei insbesondere das 2,3,7,8-Tetrachlordibenz-dioxin unter der Bezeichnung TCCD bekannt, eine der giftigsten synthetischen chemischen Substanzen darstellt. Neben Tetrachlordibenz-dioxin sind auch Penta- und Hexachlornaphthaline, wie sie in Holzschutzmitteln und auch als Weichmacher in Runststoffmassen teilweise verwendet wurdenl zu den hochstabilen toxischen Substanzen zu zählen. Relativ gute Stabilität und hohe Toxizität weisen auch polychlorierte Biphenyle auf.

Vorbehandlungsverfahren von Schrott, welche darauf abzielen organische Verunreinigungen zu entfernen, sind beispielsweise der AT-PS 372 407 zu entnehmen. Bei dieser bekannten Verfahrensweise wird Stahlschrott in Brennkammern vorbehandelt und es wird eine Schwelung bzw. Verbrennung vorgenommen, welche bedingt durch die bei einer derartigen Schwelung bzw.

Verbrennung vorherrschenden Temperaturen im Falle von chlorhältigen Kohlenwasserstoffen bereits zur Bildung von Dioxinen führt. Die Zersetzung derartiger überaus stabiler halogenierter Kohlenwasserstoffe erfolgt zwar in der Regel in der Sfolge in einem Schmelzprozeß bei Temperaturen von über 1200°C. Da jedoch die gasförmigen Zersetzungsprodukte freigesetzt werden und bei einem Abkühlen in der Regel unmittelbar eine Rekombination zu Dioxinen erfolgt, hat eine derartige Zersetzung von chlorierten Kohlenwasserstoffen auch bei hoher Temperatur keine nachhaltige Wirkung für die Entfernung bzw. Vermeidung von Dioxinen in den Abgasen des Schmelzprozesses. Bei sämtlichen Prozessen, bei denen Schrott od.dgl.

enthaltende organische Verunreinigungen unter oxidierenden Bedingungen auf Temperaturen eines Schwelprozesses oder gar einer Verbrennung erwärmt werden, entstehen Dioxine und polychlorierte Furane, sofern die hiefür erforderlichen Mengen an Chlor freigesetzt werden. Die Beseitigung derartiger chlorierter Kohlenwasserstoffe könnte in der Folge nur durch Behandlung der gesamten prozeßbedingten Abgasmengen entweder durch irreversible Spaltung dieser Verbindung durch eine Hochtemperaturverbrennung oder durch eine selektive Abscheidung in einem entsprechend groß dimensionierten Filter erfolgen. In beiden Fällen ist auf Grund der großen Abgasmenge ein hoher apparativer Aufwand erforderlich und es ist darüberhinaus eine aufwendige Kontrolle der möglicherweise freigesetzten Dioxin- oder Furanemission laufend vorzunehmen.

Die Erfindung zielt nun darauf ab, ein Verfahren der eingangs genannten Art zu schaffen, welches bei der nachfolgenden Weiterverarbeitung des Schrottes die Entstehung von Dioxinund Furanemissionen verhindert. Zur Lösung dieser Aufgabe besteht das erfindungsgemäße Verfahren in wesentlichen darin, daß der Schrott auf Temperaturen unter 450°C unter $O_2$ Mangelbedingungen erhitzt wird und das die hiebei gebildeten Gase einer Waschung unterworfen werden. Dadurch, das der Schrott auf Temperaturen unter 450°C unter $O_2$ Mangelbedingungen erhitzt wird, wird zunächst sichergestellt, daß leicht flüchtige bzw. leicht zersetzliche organische Verbindungen nicht unter Bildung von Dioxinen rekombinieren können. Gleichzeitig wird bei derartigen Temperaturen sichergestellt, daß unter $O_2$ Mangelbedingungen typische chlorhaltige Kunststoffe, wie z.B. PVC, zur Gänze ihren Chloranteil verlieren, so daß dann lediglich die kohlenstoffangereicherte Kohlenwasserstoffstruktur im wesentlichen unzersetzt verbleibt. Da sich unterhalb der Obergrenze der Temperatur von 450°C aus Kohlenwasserstoffen und HCl keine Dioxine bilden können, kann das sich bildende HCl-reiche Gas einfach gereinigt werden, wofür es genügt, die Gase einer Waschung zu unterwerfen. Nach dem Abtrennen von Halogenen verbleibt ein gegebenenfalls noch einen Heizwert aufweisendes Gas, welches gefahrlos einer Verbrennung zugeführt werden kann, wobei mit Rücksicht auf die Abwesenheitvon HCl eine Dioxinbildung nicht mehr eintreten kann. Mit Vorteil wird das erfindungsgemäße Verfahren so durchgeführt, das die thermische Behandlung bei Temperaturen von 200 bis 450°C, insbesondere 300 bis 400°C, vorgenommen wird. Insbesondere bei relativ tiefen Temperaturen, wie beispielsweise 200°C, läßt sich bereits eine nahezu quantitative Abtrennung von Halogenen, insbesondere HCl, erzielen, wobei innerhalb des bevorzugten Bereiches von 300 bis 400° C eine quantitative Abtrennung von Halogenen möglich wird und die Bildung von Dioxinen mit Sicherheit vermieden wird.

In besonders einfacher Weise kann die thermische Energie für die Erwärmung des Schrottes auf die geforderten Temperaturen für die Vorbehandlung durch induktive Beheizung oder durch Einbringen von inertem, gasförmigem Heizmedium vorgenommen werden. Im Fall der induktiven Beheizung ist es in einfacher Weise möglich, innerhalb eines Autoklaven entsprechende Sauerstoffmangelbedingungen aufrechtzuerhalten, und im Fall der Verwendung von inertem, gasförmigem Heizmedium werden die $O_2$ Mangelbedingungen durch das inerte, gasförmige Heizmedium unmittelbar eingehalten.

Wie bereits erwähnt, kann mit Rücksicht auf die vollständige Abtrennung von HCl das abgezogene Gas, sofern es einen hinreichenden Heizwert aufweist, in der Folge nach dem Waschen gefahrlos einer Verbrennung zugeführt werden, wodurch die Energiebilanz des Prozesses weiter verbessert werden kann.

Die Erfindung wird nachfolgend an Hand eines Ausführungsbeispieles näher erläutert. Es wurden 50 t/h Schrott über eine mit Stickstoff gegen Atmosphäre abgeschirmte Aufgabevorrichtung in einem Drehrohrofen aufgegeben. In der aufgegebenen Schrottmenge wurden 1 % Kohlenwasserstoffe, 0,1 % Chlor und 2 % Wasser festgestellt. Durch Zufuhr von 2,7 MW Brennstoffwärme wurde die Charge indirekt auf eine Temperatur von 200° C aufgewärmt und über mehrere Minuten bis zum Austrag gehalten. Das abgesaugte Gas enthielt 1000 kg $H_2O$, 750 kg Stickstoff, 45 kg Kohlenwasserstoffe, 5 kg HCl und wurde über einen Wäscher geleitet, wodurch es von Chlor bzw. HCl befreit wurde.

Nach der Naßreinigung wurden 640 Nm$^3$ eines Brenngases mit einem Heizwert von 0,42 MW erhalten. Dieses Gas wurde zur Beheizung des Drehrohrofens mitverwendet. Im Wäscher wurde Chlor als ökologisch unbedenkliches $CaCl_2$ aufgefunden, wobei das in allen Gebrauchswässern üblicherweise vorhandene $Ca(OH)_2$ für die festgestellten Mengen an HCl sich als ausreichend für die Abtrennung des Chlors erwiesen hat.

Der erwärmte Schrott wurde vom Drehrohrofen unmittelbar auf eine Fördereinrichtung abgeworfen und mit seiner fühlbaren Wärme einer Einschmelzanlage direkt zugeführt.

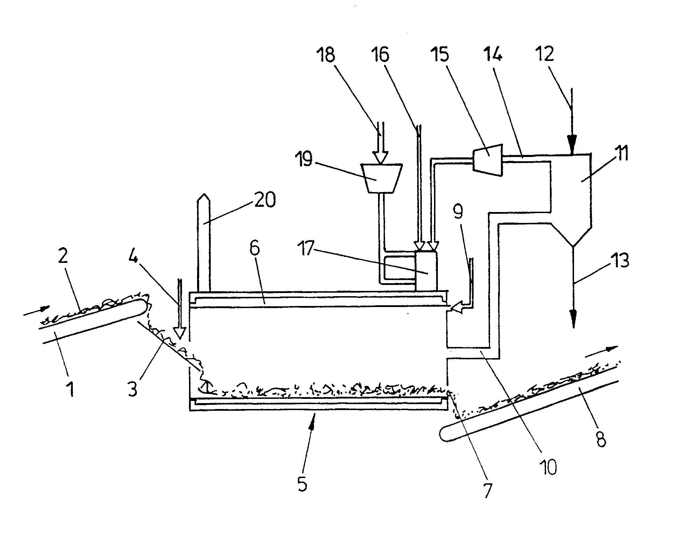

Eine für die Durchführung des erfindungsgemäßen Verfahrens geeignete Vorrichtung ist hiebei in der Zeichnung schematisch dargestellt. In der Zeichnung ist mit 1 ein Schrottzuführungsband bezeichnet, über welches beispielsweise durch einen Schredder vorzerkleinerter Schrott 2 einer Aufgabeeinrichtung 3 zugeführt wird. Im Bereich der Aufgabeeinrichtung 3 wird entsprechend dem Pfeil 4 ein Sperrgas, wie beispielsweise Stickstoff zugeführt. Von der Aufgabeeinrichtung 3 gelangt der vorzerkleinerte Schrott 2 in einen Drehrohrofen 5, welcher ein durch eine indirekte Beheizung außenbeheiztes Drehrohr 6 aufweist. Nach Durchlauf durch den Drehrohrofen 5 wird der auf etwa 200 bis 300° C erwärmte, von Chlor befreite Schrott durch eine Austragöffnung 7 auf einen Förderer 8 abgeworfen, von welchem der Schrott direkt zum Schrotteinschmelzen, beispielsweise nach dem KVA-Verfahren, geführt wird. Um den Drehrohrofen 5 gasdicht gegenüber der Atmosphäre abzuschließen, ist auch am Austragsende wiederum eine Sperrgaszuführung 9 vorgesehen. Ober eine Gasableitung 10 werden die Abgase aus dem Drehrohrofen 5 einem Wäscher 11 zugeführt. Am Kopf des Wäschers wird über eine Waschwasser-Zuleitung 12 mit Calziumhydroxid angereichertes Waschwasser zugeführt. Das Calziumhydroxid reagiert hiebei im Inneren des Wäschers mit dem HCl des Abgases zu Calziumchlorid und wird zusammen mit dem Abwasser über Leitung 13 aus dem Wäscher ausgetragen. Die gewaschenen Abgase werden über eine Leitung 14 einem Verdichter 15 zugeführt und gemeinsam mit über Leitung 16 eingebrachte Fremdbrennstoffe dem Brenner 17 zugeführt. Da die aus dem Wäscher austretenden Abgase einen zu geringen Sauerstoffgehalt aufweisen, muß dem Brenner 17 zusätzliche Brennluft zugeführt werden, welche über eine Leitung 18 und einen Verdichter 19 in den Brenner 17 gelangt. Die heißen Abgase aus dem Brenner 17 durchströmen den Heizmantel 6 des Drehrohrofens 5 und erwärmen so den Schrott 2 auf die für die thermische Vorbehandlung erforderliche Temperatur. Die Abgase aus dem Brenner 17 werden anschließend über die Rauchgasabführung 20 ausgetragen.

## Ansprüche

1. Verfahren zur thermischen Vorbehandlung von Schrott (2) zur Verringerung der Schadstoffbildung bei einem nachfolgenden Einschmelzprozeß, dadurch gekennzeichnet, daß der Schrott (2) auf Temperaturen unter 450° C unter $O_2$ Mangelbedingungen erhitzt wird und daß die hiebei gebildeten Gase einer Waschung unterworfen werden.

2. Verfahren nach Anspruch 1, dadurch gekennzeichnet, daß die thermische Behandlung bei Temperaturen von 200 bis 450° C, insbesondere 300 bis 400° C, vorgenommen wird.

3. Verfahren nach Anspruch 1 oder 2, dadurch gekennzeichnet, daß die Erhitzung durch induktive Beheizung oder durch Einbringen von inertem, gasförmigem Heizmedium vorgenommen wird.

4. Verfahren nach Anspruch 1, 2 oder 3, dadurch gekennzeichnet, daß das abgezogene Gas nach dem Waschen einer Verbrennung zugeführt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 612 553 (E. DUMONT)<br>* Spalte 2, Zeilen 31-36 *<br>--- | 1 | C 21 C 5/56<br>C 22 B 1/00 |
| Y | EP-A-0 070 819 (BOLIDEN)<br>* Seite 5, Zeile 12 - Seite 6, Zeile 3 *<br>--- | 1 | |
| A | DD-A- 149 083 (ORGATECHNA TREUHAND)<br>* Anspruch 1 *; & AT-B-372407 (Kat. D)<br>--- | 1 | |
| A | EP-A-0 075 978 (SAB NIFE)<br>* Ansprüche 1,4 *<br>--- | | |
| A | EP-A-0 274 059 (RECYTEC)<br>* Ansprüche 1,10 *<br>--- | | |
| A | DE-A-2 032 720 (G. MÖLLER)<br>* Anspruch 1 *<br>----- | 1 | |

**RECHERCHIERTE SACHGEBIETE (Int. Cl.5)**

C 22 B

Der vorliegende Recherchenbericht wurde für alle Patentansprüche erstellt

| Recherchenort | Abschlußdatum der Recherche | Prüfer |
|---|---|---|
| BERLIN | 18-12-1990 | SUTOR W |